# EUROPÄISCHE PATENTANMELDUNG

(11) **EP 4 763 680 A1**
(43) Veröffentlichungstag der Anmeldung: **24.06.2026**
(21) Anmeldenummer: 25224863.8
(22) Anmeldetag: 18.12.2025
(51) Int. Cl.: B62K 23/06, B60T 7/10, B62L 3/02

(54) **BREMSKOMPONENETE MIT EINEM HANDBETÄTIGTEN BREMSHEBEL ZUR BETÄTIGUNG EINES BREMSZYLINDERS**

(30) Priorität: 23.12.2024 DE 102024139659
(71) Anmelder: Trickstuff GmbH, 79292 Pfaffenweiler (DE)
(72) Erfinder: Pelot, Santé Miguel, 79102 Freiburg (DE); Guéhenneuc, Gurvan, F-68740 Fessenheim (FR); Holm, Martin, 79098 Freiburg (DE)
(74) Vertreter: BSB Patentanwälte Schütte & Engelen Partnerschaft mbB

(57) **Zusammenfassung**

Bremskomponente (1) mit einem handbetätigten Bremshebel (2) zur Betätigung einer Handbremse eines Fahrrads oder eines Motorrads oder dergleichen, wobei der Bremshebel (2) einen sich in einer Längsrichtung (4) erstreckenden Hebelkörper (3) mit einem daran ausgebildeten Hebelelement (5) zum handbetätigten Belasten des Bremshebels (2) umfasst, um eine Bremswirkung auszulösen. Ein proximaler Teil (10) des Hebelelementes (5) weist eine Lagerstelle (11a, 11b) auf und ein distaler Teil (11) des Hebelelementes (5) ist dazu eingerichtet und dafür vorgesehen, vom Benutzer händisch unter Zugkraft gesetzt zu werden, um durch eine Schwenkbewegung um eine Schwenkachse (13) der Lagerstelle (11a, 11b) eine Bremswirkung zu veranlassen. In dem Hebelkörper (3) ist benachbart zu der Lagerstelle (11a, 11b) eine sich in eine Querrichtung (14) erstreckende Hohlkammerstruktur (6) ausgebildet, welche quer zu der Längsrichtung (4) des Hebelelements (5) und quer zu der Schwenkachse (13) verläuft, um so im Bereich der Hohlkammerstruktur (6) eine Sollbruchstelle (30) des Hebelelements (5) bereitzustellen, damit im Falle eines Aufpralls das Hebelelement (5) an dieser vordefinierten, proximal angeordneten Sollbruchstelle (30) bricht. Benachbart zu der ersten Lagerstelle (11a) ist eine zweite Lagerstelle (11b) an dem Hebelkörper (3) ausgebildet. Die Hohlkammerstruktur (6) ist zwischen der ersten und der zweiten Lagerstelle (11a, 11b) ausgebildet.

## Beschreibung

Die vorliegende Erfindung betrifft eine Bremskomponente mit einem handbetätigten oder handbetätigbaren Bremshebel zur Betätigung einer Handbremse und insbesondere eines Bremszylinders, vorzugsweise eines Bremszylinders einer Hydraulikbremse, insbesondere eines Fahrrades oder eines Motorrades oder dergleichen sowie eine Bremsvorrichtung, insbesondere hydraulisch betriebene Bremsvorrichtung, insbesondere eines Fahrrades oder Motorrades oder dergleichen sowie ein Verfahren zur Herstellung eines Bremshebels, wobei der Bremshebel ein Hebelelement zum handbetätigten Zug- oder Druckbelasten des Hebelelementes, um eine Bremswirkung des Bremszylinders auszulösen. Die Erfindung kann auch einen anderen Hebel an einem Lenker eines Fahrrads betreffen, wie z.B. einen Hebel für die Schaltung, die Federung oder zur Einstellung der Sattelstütze insbesondere eines Fahrrades.

Im Stand der Technik sind handbetätigte Bremshebel zur Betätigung eines Bremszylinders bekannt geworden.

Bei einem Unfall sollte ein Bremshebel nicht so brechen, dass er gefährlich wird. Aus dem Stand der Technik sind zwar solche Bremshebel, insbesondere zum Beispiel auf Mountainbikes oder Motorrädern bekannt, die im Falle eines Aufpralles abbrechen können, für gewöhnlich an der dünnsten Stelle des Bremshebels. Meist verbleibt ein relativ langes Reststück an dem Pumpengehäuse. Das hat den Vorteil, dass der Bremshebel oft im Notfall bedienbar bleibt. Der Fahrer kann mit noch ein, zwei oder mehr Fingern den restlichen Hebel als Bremse weiterverwenden. Nachteilig ist aber, dass ein gebrochener Hebel oft ein scharfes Ende hat. Die Verletzungsgefahr für die Hand ist hoch, wenn der Benutzer mit einem gefährlich scharfen Hebelende weiterfährt. Ausgehend hiervon ist es daher eine Aufgabe, in kostengünstiger Art und Weise, eine Bremskomponente mit einem handbetätigten oder handbetätigbaren Bremshebel für Fahrräder, Motorräder oder dergleichen anzubieten, bei dem im Falle eines Unfalls eine Verletzungsgefahr (der Hand) des Benutzers deutlich verringert wird.

Diese Aufgabe wird gelöst durch eine Bremskomponente mit den Merkmalen des Anspruchs 1. Bevorzugte Weiterbildungen sind Gegenstand der abhängigen Ansprüche. Weitere Vorteile und Merkmale der vorliegenden Erfindung ergeben sich aus der allgemeinen Beschreibung und den Ausführungsbeispielen.

Eine erfindungsgemäße Bremskomponente umfasst einen handbetätigten Bremshebel zur Betätigung einer Handbremse insbesondere eines Fahrrads oder eines Motorrads oder dergleichen. Der Bremshebel umfasst wenigstens einen sich in einer Längsrichtung erstreckenden Hebelkörper mit einem daran ausgebildeten Hebelelement zum handbetätigten Belasten (Zug- oder Druckbelasten) des Bremshebels, um eine Bremswirkung (über insbesondere einen Bremszylinder oder gegebenenfalls einen Bowdenzug) auszulösen, wobei ein proximaler Teil des Hebelelementes zumindest eine Lagerstelle aufweist, und wobei ein distaler Teil des Hebelelementes dazu eingerichtet und dafür vorgesehen ist, vom Benutzer händisch (in einer Belastungsrichtung) unter Zugkraft gesetzt zu werden, um durch eine Schwenkbewegung (des Hebelkörpers) um eine Schwenkachse der Lagerstelle eine Bremswirkung (der Handbremse) zu veranlassen und insbesondere einen Bremszylinder zur Entfaltung einer Bremswirkung zu bringen).

Erfindungsgemäß ist in dem Hebelkörper benachbart zu der Lagerstelle eine sich quer zu der Längsrichtung des Hebelelements und quer zu der Schwenkachse in eine Querrichtung erstreckende Hohlkammerstruktur ausgebildet, um so im Bereich der Hohlkammerstruktur eine Sollbruchstelle des Hebelelements (an oder in dem Hebelelement) bereitzustellen oder zu erzeugen, damit im Falle eines Aufpralls das Hebelelement an dieser vordefinierten, proximal angeordneten Sollbruchstelle (und vorzugsweise nur oder primär an dieser Sollbruchstelle) bricht. Insbesondere ist benachbart zu der ersten Lagerstelle eine zweite Lagerstelle an dem Hebelkörper ausgebildet und die Hohlkammerstruktur ist bevorzugt zwischen der ersten und der zweiten Lagerstelle ausgebildet.

Erfindungsgemäß kann ein Verletzungsrisiko des Benutzers reduziert werden. Insbesondere kann so eine Verletzung des Benutzers (und insbesondere wenigstens der Hand des Benutzers) an einem ungünstig verbleibenden Abbruchrest des Hebelelementes vermieden wird.

Die Erfindung hat viele Vorteile. Ein erheblicher Vorteil besteht darin, dass es die hier vorgeschlagene Bremskomponente daher erlaubt, dass bei einem Abbruch des Bremshebels dieser so kurz wie möglich abbricht, um eine oder sogar jedwede Verletzung (an der Hand) des Benutzers zu vermeiden. Der Abbruch wird über die Sollbruchstelle genau definiert. Dies wird durch die Ausbildung der Hohlkammerstruktur und eine damit einhergehende Wanddickenverdünnung oder Wanddickengestaltung erreicht. Der Bremshebel bzw. wenigstens das Hebelelement ist daher zumindest teilweise hohl ausgebildet. Die Wand des Hebelelements des Bremshebels ist insbesondere im Sinne einer Kavitätswand ausgebildet.

Es wird dadurch zuverlässig vermieden, dass der an der Bremskomponente verbleibende Hebelteil ein langes scharfes Ende hat. Der Bremshebel bricht nah an einer Bremseinheit und z.B. nahe an dem Pumpengehäuse. Die Verletzungsgefahr für die Hand wird ganz erheblich verringert.

Sehr vorteilhaft ist auch, dass dadurch verhindert wird, dass ein Benutzer mit einem gefährlich scharfen Hebelende weiterfährt. Das verbleibende Hebelende ist nicht lang genug, dass der Benutzer die Bremse mit zwei oder drei Fingern bedienen kann. Regelmäßig kann er den Bremshebel auch nicht mit einem einziger Finger nach dem Abbrechen bedienen. Der distale Teil kann gegebenenfalls mit dem Pumpengehäuse verbunden bleiben, aber es kann kein Druck aufgebracht werden. Der verbleibende Rest ist frei bewegbar oder fällt ab.

Ein Abbrechen an einer dünnen und vom Pumpengehäuse weit entfernten Stelle wird vermieden. Lange und scharfe Kanten werden beim Bruch nicht erzeugt, welche die Hand des Fahrers sogar noch weiter schwer verletzen können.

Bei Bremshebeln, deren Befestigungspunkt schmaler ist als die Befestigungspunkte des Pumpengehäuses, ist es nicht unbedingt notwendig, den Bremshebel zusätzlich auszudünnen, da der Bremshebel am Befestigungspunkt im Vergleich zur Fingerfläche bereits recht schmal ist.

Die Erfindung ermöglicht es, dass der Bremshebel bei einem Aufprall abbricht und das daran befestigte Teil so kurz wie möglich ist, um Verletzungen zu vermeiden. Dadurch wird auch das Design des (noch voll funktionsfähigen) Produkts möglichst wenig beeinträchtigt. Eine verbleibende Länge von 1 oder maximal 2 mm ist realistisch.

Durch einen solchen Abbruch wird auch vermieden, dass der Benutzer das Fahrrad nicht oder sehr verspätet zur Reparatur bringt. Es wird der Trugschluss vermieden, dass tatsächlich auch mit der Restlänge des Bremshebels eine ausreichende Bremskraft erzeugt werden kann. Dadurch wird die Gefahr von der Berührung von scharfen Kanten mit der Hand vermieden. Solche scharfen Kanten können sogar durch den Handschuh hindurch schneiden. Durch die Vermeidung solcher Probleme wird nicht nur die Gefährdung des Fahrers vermieden, sondern auch die Sicherheit des gesamten Verkehrs erhöht.

Ein erheblicher Vorteil durch das Ausbilden der Hohlkammerstruktur besteht darin, dass durch eine lokale Verringerung der Flächenträgheitsmomente in Querrichtung (meist die Richtung von oben nach unten im bestimmungsgemäß eingebauten Zustand) auch in Kombination mit der Hohlwandausbildung gebracht werden können. Eine Kombination von der Verringerung von Flächenträgheitsmomenten in Verbindung mit einer Hohlwandausbildung kann daher nicht nur die Sollbruchstelle umso stärker definieren.

Es ergeben sich auch unabhängig voneinander Synergieeffekte. Eine Verringerung der Flächenträgheitsmomente kann zu einer Sollbruchstelle in unmittelbarer Nähe der Befestigungspunkte führen, wenn der Hebel in der Querrichtung zur Belastung beim Bremsen belastet wird, wie zum Beispiel bei einem Unfall.

Bei der Erfindung handelt es sich um eine mechanische Sicherung für einen Bremshebel in Querrichtung (quer oder senkrecht zur üblichen Belastungsrichtung beim Bremsen; senkrecht zur Ebene in der der Bremshebel beim Bremsen verschwenkt wird), die ein Verbiegen oder Brechen des Hebels in einem bestimmten Bereich bewirkt, wobei die mechanische Sicherung vorzugsweise nicht im Bereich der geringsten Höhe (Abstand zwischen den äußersten Kanten in Querrichtung) entlang des Bremshebels liegt.

Eine Lagerstelle kann dabei als Lageraufnahme ausgestaltet sein. Die Lagerstelle kann eine Lagerbohrung und eine die Lagerbohrung umgebende Wandung umfassen. Jedenfalls definiert die Lagerstelle eine Schwenkachse. Um diese Schwenkachse kann der Hebelkörper bzw. das Hebelelement verschwenkt werden. An der Lagerstelle kann ein separates Lager wie ein Wälzlager oder ein Gleitlager dergleichen aufgenommen oder ausgebildet sein, um ein reibungsarmes Verschwenken zu ermöglichen. Denkbar ist es in einfachen Ausgestaltungen auch, dass die Lagerstelle direkt in dem Hebelkörper ausgebildet wird (und insbesondere keine Wälzkörper aufweist und kein Lager oder Gleitlager umfasst).

Der Bremshebel kann durch 3D-Druck hergestellt werden, könnte aber auch durch Gießen oder Formen erreicht werden. Ein Schwerpunkt dieser Erfindung liegt auf einem 3D-gedruckten Hebel, aber im Falle eines Hebels aus Faserverbundwerkstoffen (Kohlefaser etc.) könnte das Ziel auch mit dem Lagenbild ("Layup" bzw. über die Lagenanzahl und die Lagenanordnung) erreicht werden.

In bevorzugten Weiterbildungen umfasst die Hohlkammerstruktur mehrere benachbarte (und voneinander separate und getrennte) Hohlkammern. Zwischen den einzelnen Hohlkammern sind dann vorzugsweise (dünne) Wände ausgebildet. Die Hohlkammern können als Hohlräume ausgebildet sein und alternativ zum Begriff Hohlkammer auch als solche (Hohlräume) bezeichnet werden.

Vorzugsweise ist wenigstens eine Hohlkammer als Aussparung ausgebildet und ist an wenigstens einem Ende zur Umgebung offen ausgebildet. Eine Hohlkammer ist regelmäßig mit z.B. Luft (Umgebungsluft) oder einem anderen Material gefüllt. Wenn ein (festes) Material verwendet wird, wird die Hohlkammer grundsätzlich bevorzugt mit einem leichteren Material als das Material des Hebelkörpers gefüllt. Beispielsweise mit einem Schaumstoff oder einem Kunststoff oder dergleichen.

In bevorzugten Ausgestaltungen sind die Hohlkammern als durchgehende Öffnungen ausgebildet, die sich von einer bis zur gegenüberliegenden Oberfläche an dem Hebelkörper erstrecken. Insbesondere sind Hohlkammern im montierten Zustand sichtbar. Es ist auch möglich, die Hohlkammern durch eine Abdeckung oder ein Band oder dergleichen zu verschließen. Besonders bevorzugt sind einzelne und insbesondere die meisten oder alle Hohlkammern der Hohlkammerstruktur jeweils (ringsum oder vollständig) von einer Wandung umgeben.

In vorteilhaften Weiterbildungen weist wenigstens eine Wandung um eine Hohlkammer wenigstens eine Einkerbung (zur Erzeugung oder Verstärkung der Wirkung der Sollbruchstelle) auf. Das trägt zu der Funktion der Sollbruchstelle bei.

Vorzugsweise ist die Hohlkammerstruktur in der Querrichtung (des Hebelkörpers) erheblich länger ausgebildet ist als in der Längsrichtung (des Hebelkörpers) breit und/oder entlang der Schwenkachse dick. Vorzugsweise ist die Hohlkammerstruktur um wenigstens einen Faktor 2 oder 3 oder 4 länger als breit und/oder dick.

Es ist vorteilhaft, wenn sich die Hohlkammerstruktur über mehr als 2/3 oder mehr als 70% oder mehr als 75% oder 80% oder 90% oder mehr einer Breite des Hebelkörpers erstreckt.

Die Hohlkammerstruktur kann eine Wabenstruktur und/oder Gitternetzstruktur aufweisen, bei der die Wandungen zwischen den Hohlkammern die Wabenstruktur bilden.

Insbesondere ist eine maximale Erstreckung einer Hohlkammer in einer durch die Querrichtung und die Längsrichtung aufgespannten Ebene (bzw. Ebene parallel zur Oberfläche des Hebelkörpers; die Querrichtung und die Längsrichtung liegen in oder parallel zu der Schwenkebene des Bremshebels beim "normalen" Bremsen) kleiner als 1/3 oder1/4 oder 1/5 oder 1/6 oder 1/8 einer Breite des Hebelkörpers in dem Bereich der Hohlkammerstruktur. Das bedeutet, dass die Hohlkammerstruktur eine Mehrzahl von 3, 4, 5, 6 oder eine Vielzahl kleiner oder dünner Hohlkammern oder Aussparungen aufweist.

In besonders bevorzugten Ausgestaltungen ist benachbart zu der (ersten) Lagerstelle eine zweite Lagerstelle an dem Hebelkörper ausgebildet. Dann ist die Hohlkammerstruktur insbesondere zwischen der ersten und der zweiten Lagerstelle ausgebildet. Ein Zwischenraum zwischen den beiden Lagerstellen in Längsrichtung ist vorzugsweise kleiner als eine Breite des Hebelkörpers zwischen den Lagerstellen und insbesondere auch kleiner als ein Durchmesser oder Radius einer Lagerstelle.

Es ist möglich und bevorzugt, dass eine zweite Hohlkammerstruktur an dem Hebelkörper ausgebildet ist. Die zweite Hohlkammerstruktur kann insbesondere an dem gleichen Abschnitt (des Hebelkörpers ausgebildet sein. Die zweite Hohlkammerstruktur kann an dem gleichen Gabelast vorhanden sein, wenn der_Hebelkörper z.B. über zwei Gabeläste verfügt. Vorzugsweise ist eine zweite Hohlkammerstruktur benachbart zu der zweiten Lagerstelle ausgebildet. Vorzugsweise ist dann seitlich auf beiden Seiten der zweiten Lagerstelle jeweils eine Hohlkammerstruktur vorgesehen.

Es ist bevorzugt, dass der Hebelkörper wenigstens ein Paar entlang der Schwenkachse fluchtend übereinander angeordneter Lagerstellen aufweist, dem ein Paar von Hohlkammerstrukturen zugeordnet ist.

Gemäß zumindest einer Ausführungsform verläuft der distale Teil des Bremshebels (dann) in Richtung des proximalen Teils des Bremshebels gabelförmig, und bildet damit (wenigstens) zwei übereinander angeordnete Gabeläste aus. Die Gabeläste sind vorzugsweise deckungsgleich und/oder spiegelsymmetrisch ausgebildet. An den Gabelästen ist das Paar an miteinander fluchtenden Lagerstellen oder Lagerbohrungen ausgebildet.

Es ist möglich und bevorzugt, dass an den zwei übereinander verlaufenden Gabelästen (auch noch) ein zweites Paar fluchtend übereinander angeordneter Lagerstellen ausgebildet oder umfasst ist. Dann ist es bevorzugt, dass zwischen dem ersten Paar und dem zweiten Paar der Lagerstellen (jeweils) die Hohlkammerstruktur als Sollbruchstelle ausgebildet ist. Eine solche Sollbruchstelle erlaubt eine zuverlässige Funktion und ein hohes Maß an Sicherheit.

Gemäß zumindest einer bevorzugten Ausführungsform ist wenigstens eine Hohlkammer oder ein Hohlraum frei von einer inneren Unterstützungsstruktur, sodass ein Durchbrechen an der vordefinierten Sollbruchstelle gezielt erreichbar ist.

Dadurch, dass die Hohlkammer bzw. der Hohlraum frei von einer inneren Unterstützungsstruktur ist, wird eine Abfälschung einer Sollbruchstelle durch die nicht vorhandene Unterstützungsstruktur vermieden. Gerade durch den Verzicht auf jegliche Unterstützungsstruktur innerhalb der Hohlräume, also Querstreben innerhalb der einzelnen Hohlräume etc., wird eine Ausbildung und Anlenkung der Sollbruchstelle zuverlässig definierbar.

Gemäß zumindest einer Ausführungsform ist durch die gezielte Ausbildung der Hohlkammerstruktur und/oder oder durch eine gezielte Ausbildung zumindest eines weiteren Hohlraums oder einer weiteren Hohlkammerstruktur an oder innerhalb des Bremshebels im Falle eines Aufpralls zumindest eine Folgesollbruchstelle und/oder eine alternative oder weitere Sollbruchstelle an dem Bremshebel ausgebildet. Diese alternative, weitere oder andere Sollbruchstelle ist insbesondere dazu eingerichtet und dafür vorgesehen, zu brechen. wenn (wenigstens) eine (definierte) andere Belastung bzw. ein definierter anderer Lastfall auftritt. Die eine Hohlkammerstruktur ist insbesondere für einen (ersten) Lastfall ausgelegt und stellt eine (bzw. eine erste) Sollbruchstelle zur Verfügung. Die andere Hohlkammerstruktur ist insbesondere für einen anderen oder zweiten Lastfall ausgelegt und stellt eine andere (bzw. eine zweite) Sollbruchstelle zur Verfügung. Die (primär) einwirkende Kraft oder Last in dem zweiten Lastfall ist insbesondere quer (oder senkrecht) zu einer (primär) einwirkenden Kraft oder Last in dem ersten Lastfall ausgerichtet. Möglich ist es auch, dass eine Sollbruchstellenkaskade zur Verfügung gestellt wird.

Gemäß zumindest einer Ausführungsform sind die Bruchstellen an verschiedenen Lagerstellen oder Ästen und/oder an verschiedenen Gabeln (auch Gabelelement oder Bremshebelgabelelement genannt) ausgebildet, sodass eine Verletzung (der Hand) des Benutzers an einem Rest des Hebelelementes vermieden wird.

Vorzugsweise sind ein oder mehrere Flächenträgheitsmomente der Gabeläste in horizontaler Richtung und/oder vertikaler Richtung so eingestellt, um die Sollbruchstelle und vorzugsweise ebenso die Folgesollbruchstelle vordefiniert ausbilden zu können.

Insbesondere weist die Hohlkammerstruktur zumindest zwei oder mehr voneinander durch eine Wandung voneinander getrennte Hohlkammern oder Hohlräume auf, die jeweils nach Art des ersten Hohlraums ausgebildet sind, wobei die Hohlräume insbesondere ebenso frei von inneren Unterstützungsstrukturen sind.

Die Hohlkammerstruktur kann in horizontaler Richtung zwischen den Lagerbohrungen innerhalb zumindest eines Gabelastes zumindest stellenweise eine Gitternetzstruktur durch das Hebelmaterial ausbilden, wobei zumindest eines der Gitterstäbe der Gitternetzstruktur die Sollbruchstelle oder eine weitere Sollbruchstelle ausbildet.

In bevorzugten Ausgestaltungen ist zumindest stellenweise, vorzugsweise proximal, zum Beispiel zwischen zwei Lagerbohrungen, insbesondere eine Berandung einer Lagerwand zumindest einer Lagerbohrung eine Einkerbung zur Erzeugung der Sollbruchstelle oder einer weiteren Sollbruchstelle erzeugt.

Gemäß zumindest einer Ausführungsform ist das Hebelelement und insbesondere der Bremshebel einstückig (und damit frei von Spalten und Nuten) ausgebildet und ist mittels eines 3D-Druckverfahren erzeugt, sodass auch die Hohlkammerstruktur durch den sukzessiven Schichtaufbau gedruckt ist bzw. sich dadurch ergibt.

Insbesondere ist der Bremshebel bzw. das Hebelelement einstückig mit einem Kunststoff gebildet. Der Kunststoff ist vorzugsweise faserverstärkt.

Gemäß zumindest einer Ausführungsform ist die Bremskomponente und insbesondere der Bremshebel zumindest stellenweise mit einem Metall oder einem Metallverbundwerkstoff gebildet und bildet einen Bremshebel für ein Fahrrad oder Motorrad, der am Lenker befestigt ist.

Gemäß zumindest einer Ausführungsform umfasst die Bremskomponente eine Bremseinheit wie einen hydraulichen Bremszylinder. Die Bremskomponente kann als Bremsvorrichtung und insbesondere als hydraulisch betriebene Bremsvorrichtung ausgebildet sein. Die Bremsvorrichtung ist insbesondere zur Verwendung an einem Fahrrad (oder einem Motorrad oder dergleichen) vorgesehen und umfasst einen Bremshebel, wie zuvor beschrieben. Der Bremshebel betätigt mittels Drehung um zumindest eine Lagerbohrung vorzugsweise eine Bremshydraulik.

Die Anmelderin behält sich vor, einen (weiteren) Fahrradbedienhebel (separat) zu beanspruchen. Ein solcher Fahrradbedienhebel umfasst einen handbetätigten Bedienhebel zur Betätigung einer Fahrradkomponente wie einem Schaltwerk, einer Sattelstütze, einem Federelement und einem Dämpfungselement, wobei der Bedienhebel einen sich in einer Längsrichtung erstreckenden Hebelkörper mit einem daran ausgebildeten Hebelelement zum handbetätigten Belasten des Bedienhebels umfasst, um eine Einstellung zu ändern oder eine Wirkung auszulösen, wobei ein proximaler Teil des Hebelelementes zumindest eine Lagerstelle aufweist, und wobei ein distaler Teil des Hebelelementes dazu eingerichtet und dafür vorgesehen ist, vom Benutzer händisch unter Zugkraft gesetzt zu werden, um durch eine Schwenkbewegung um eine Schwenkachse der Lagerstelle eine Einstellung zu ändern oder eine Wirkung auszulösen. Dabei ist in dem Hebelkörper benachbart zu der Lagerstelle eine sich in eine Querrichtung erstreckende Hohlkammerstruktur ausgebildet, welche quer zu der Längsrichtung des Hebelelements und quer zu der Schwenkachse verläuft, um so im Bereich der Hohlkammerstruktur eine Sollbruchstelle des Hebelelements bereitzustellen, damit im Falle eines Aufpralls das Hebelelement an dieser vordefinierten, proximal angeordneten Sollbruchstelle bricht. In entsprechend angepasster Weise könnte auch ein Kupplungshebel bereitgestellt werden.

Das erfindungsgemäße Fahrrad umfasst einen Rahmen, wenigstens zwei Räder und einen Lenker und wenigstens eine Bremskomponente in einer zuvor beschriebenen Ausgestaltung oder Weiterbildung. Dabei ist der Bremshebel wenigstens einer Bremskomponente insbesondere an dem Lenker befestigt.

Ein Verfahren, für welches die Anmelderin sich vorbehält, Schutz zu beantragen, dient insbesondere zur Herstellung einer zuvor beschriebenen Bremskomponente und insbesondere eines Bremshebels und besonders bevorzugt eines Bremshebels einer hydraulisch betriebenen Handbremsvorrichtung, wobei mittels einer 3D Druckeinrichtung wenigstens ein Hebelelement oder der Bremshebel insgesamt insbesondere Schicht für Schicht gedruckt wird. Insbesondere werden zur Vermeidung von flüchtigem, während des Druckens entstehender Staubbelastung durch das Druckmittel, zum Beispiel eines in Staubform bestehenden Werkstoffes, während des Druckens Absaugöffnungen in dem Bremshebel selbst ausgebildet, durch welche hindurch das Druckmittel abgesaugt wird, sodass eine Staubbelastung minimiert ist. Als Werkstoff kann ein Kunststoff verwendet werden. Vorzugsweise wird ein Leichtmetall gedruckt. Besonders bevorzugt Titan oder ein Werkstoff auf Basis von Titan. Beim Drucken wird insbesondere wenigstens eine Lagerstelle zur Bereitstellung einer Schwenkachse ausgebildet. Benachbart zu der Lagerstelle wird eine Hohlkammerstruktur (mit mehreren voneinander getrennten Hohlkammern) ausgebildet, um so im Bereich der Hohlkammerstruktur eine Sollbruchstelle des Hebelelements bereitzustellen, damit im Falle eines Aufpralls das Hebelelement an dieser vordefinierten Sollbruchstelle bricht.

Vorzugsweise werden an der Lagerstelle mehrere benachbarte und um die Schwenkachse umlaufende Nuten ausgebildet. Dadurch wird das Gewicht reduziert. Insbesondere werden dadurch die Toleranzen für den Einbau eines Lagers vergrößert. Wird zum Beispiel ein Wälzlager eingebaut, so sind regelmäßig enge Toleranzen sinnvoll.

Grundsätzlich sind die erzielbaren Toleranzen am fertigen Produkt durch 3D-Druck aber schlechter als bei einer anderen Fertigung. Durch eine spanende Nachbearbeitung könnte die Toleranz wieder verringert werden (und die Passgenauigkeit verbessert werden). Das ist aber aufwendig. Vorteilhafter ist es, wenn durch die umlaufenden Nuten eine Struktur zur Verfügung gestellt wird, bei der die Anforderung an die erforderlichen Toleranzen verringert wird. Dadurch, dass sich eine "wellenförmige" Struktur an der Innenwandung der Lagerstelle (parallel zur Drehachse) ergibt, kann bei Einbau eines Lagers eine (geringe) lokale Verformung erreicht werden, sodass die Genauigkeit der Fertigung reduzierbar ist. In gewissem Sinne findet ein lokaler Ausgleich des Materials bzw. eine lokale Verdichtung und Entspannung in dem (regelmäßig harten) Material der Lagerschale bzw. in der umgebenden Wandung des Hebelelementes statt. Das ist insbesondere bei einem Bedienhebel oder Bremshebel vorteilhaft, der mit 3D-Druck hergestellt wird.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Mountainbikes mit erfindungsgemäßen Bremskomponenten;
- Figur 2: eine erfindungsgemäße Bremskomponente in einer perspektivischen Ansicht;
- Figuren 3, 4: Detailansichten erfindungsgemäßer Bremskomponenten;
- Figuren 5a-5c: vergrößerte Detailansichten erfindungsgemäßer Bremskomponenten;
- Figur 6: eine vergrößerte Detailansicht einer Hohlkammerstruktur in einer Draufsicht;
- Figuren 7a-7b: vergrößerte Schnittansichten einer erfindungsgemäßen Bremskomponente; und
- Figuren 8: einen Querschnitt durch eine erfindungsgemäße Bremskomponente.

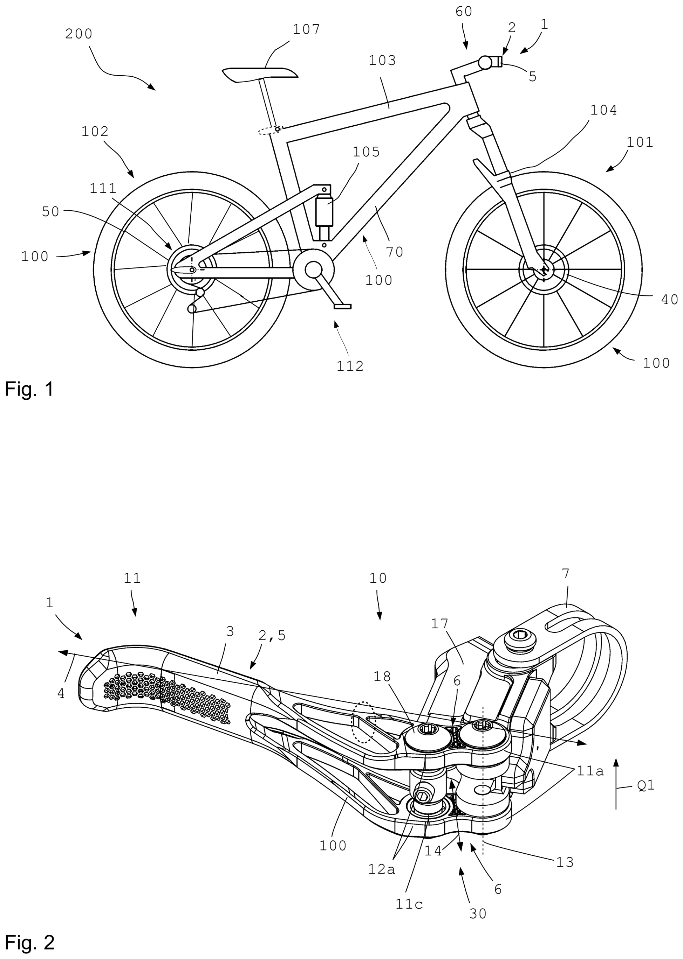

In Figur 1 ist ein Fahrrad 200 dargestellt, das jeweils über handbetätigte Bremshebel 2 verfügt. Das Mountainbike oder auch Gravel-Rad 200 verfügt über einen Lenker 60, ein Vorderrad 101 und ein Hinterrad 102, die jeweils über Fahrradfelgen 50 verfügen. Die Bremshebel 2 sind über Befestigungsschellen 7 (vgl. Fig. 2) an dem Lenker befestigt.

An dem Hinterrad 102 ist eine Ritzeleinrichtung 111 vorhanden. Die beiden Räder 101, 102 verfügen jeweils über Radspeichen 109. Es können konventionelle Felgenbremsen oder auch andere Bremsen wie zum Beispiel Scheibenbremsen vorgesehen sein.

Ein Fahrrad 200 verfügt über einen Rahmen 103, der Rahmenkomponenten 70 umfasst. Das Fahrrad 200 verfügt über einen Sattel 107, eine Fahrradgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein.

Figur 2 zeigt ein Ausführungsbeispiel einer erfindungsgemäßen Bremskomponente 1 mit einem handbetätigten Bremshebel 2 zur Betätigung eines Bremszylinders 17, vorzugsweise eines Bremszylinders einer Hydraulikbremse. Die Bremskomponente 1 ist für den Einsatz an einem Fahrrad 200 oder einem Motorrad oder dergleichen vorgesehen. Die Bremskomponente 1 kann als Set angeboten werden und auch einen Bremssattel, eine Bremsscheibe und die Hydraulikleitungen umfassen.

Der Bremshebel 2 umfasst ein Hebelelement 5 mit einem Hebelkörper 3 zum handbetätigten Zug- oder Druckbelasten des Hebelelementes 5, um eine Bremswirkung des Bremszylinders 17 auszulösen. Ein proximaler Teil 10 des Hebelelementes 5 weist hier zwei Paare an in Querbelastungsrichtung Q1 übereinander angeordneten, Lagerstellen 11a, 11b mit Lagerbohrungen auf, an denen hier Lager 11c aufgenommen sind. Ein distaler Teil 11 des Hebelelementes 5 ist dazu eingerichtet und dafür vorgesehen, vom Benutzer händisch unter Zugkraft gesetzt zu werden, um den Bremszylinder zur Entfaltung einer Bremswirkung zu bringen. Der Hebelkörper 3 erstreckt sich hier in einer Längsrichtung 4. Der Hebelkörper 3 ist hier leicht S-förmig geschwungen, kann aber im Grundsatz auch gerade ausgebildet sein oder eine andere Ausgestaltung aufweisen.

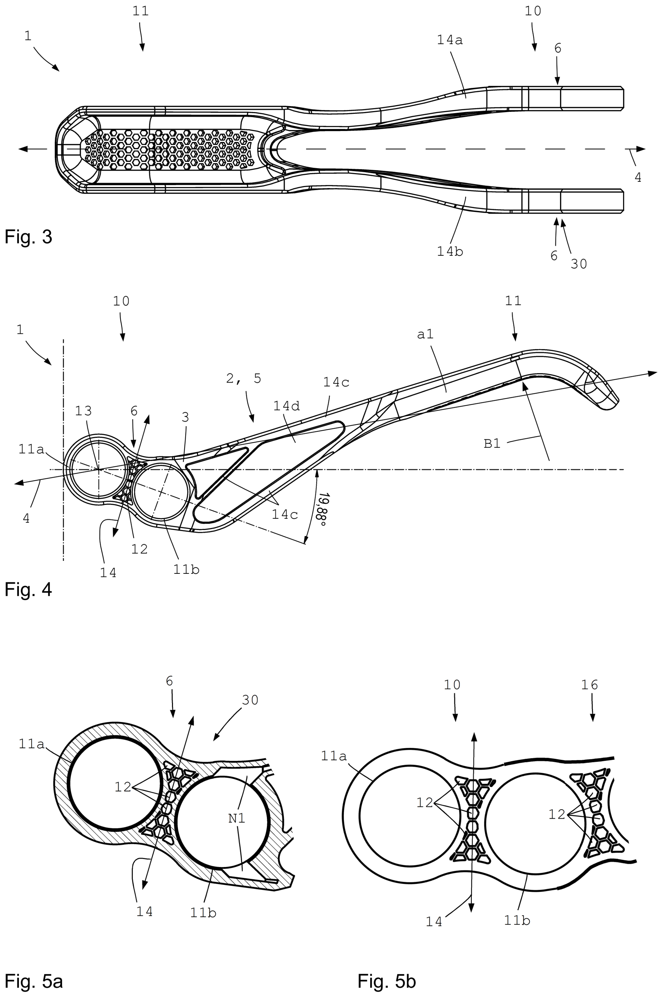

Aus Figur 2 geht hervor, dass das Hebelelement 5 zumindest eine Hohlkammerstruktur 6 mit mehreren Hohlkammern oder Hohlräumen 12 (vgl. Fig. 4) aufweist, um so im Bereich der Hohlkammerstruktur 6 eine Sollbruchstelle 30 des Hebelelements (an oder in dem Hebelelement) 5 zu erzeugen, damit im Falle eines Aufpralls das Hebelelement 5 an dieser vordefinierten, proximal angeordneten Sollbruchstelle 30 und vorzugsweise nur an dieser Sollbruchstelle 30 bricht. So wird eine Verletzung der Hand des Benutzers an einem verbleibenden Abbruchrest des Hebelelementes 5 weitgehend vermieden.

Das Hebelelement 5 ist um die Schwenkachse 13 schwenkbar, welche durch die Lagerstelle 11a definiert wird. Benachbart zu der Lagerstelle 11a erstreckt sich quer zu der Längsrichtung 4 in Querrichtung 14 die Hohlkammerstruktur 6, die über mehrere Hohlkammern 12 verfügt. Wandungen 12a umgeben die Lager 11c und die Hohlkammern 12.

Über Befestigungselemente 18 wird der Bremshebel 2 an der Bremskomponente 1 gesichert.

Die Figur 3 zeigt eine Ausführungsform der Bremskomponente 1 in einer Vorderansicht. Die Bremskomponente 1 verfügt über einen Bremshebel 2 bzw. eine Hebelelement 5, welches einen Hebelkörper 3 aufweist.

Der Bremshebel 2 ist hier gabelartig ausgebildet und erstreckt sich von einem proximalen Ende 10 zu einem distalen Ende 11. Der Hebelkörper 3 verläuft von dem distalen Ende 11 zunächst einteilig und trennt sich gabelförmig in zwei (einstückig verbundene) Gabeläste 14a, 14b auf, die parallel zueinander bis zu proximalen Ende 10 verlaufen. In der Nähe des proximalen Endes 10 ist wenigstens eine Lagerstelle 11a in den beiden Gabelästen 14a, 14b ausgebildet. Benachbart und insbesondere unmittelbar benachbart dazu ist jeweils eine Hohlkammerstruktur 6 ausgebildet, die (in beiden Ästen) eine Sollbruchstelle 30 definiert, wenn bei einem Sturz erhebliche Kräfte auf den Bremshebel 2 in Querbelastungsrichtung Q1 (vgl. Fig. 2) auftreten.

In anderen Ausgestaltungen ist es auch möglich, dass der Bremshebel 2 nicht gabelartig ausgebildet ist und nur über einen einzigen Gabelast verfügt.

In der Figur 4 ist ein Bremshebel 2 in einer Seitenansicht dargestellt. Dieser Bremshebel könnte über nur einen Gabelast 14a verfügen, kann aber auch zwei Gabeläste aufweisen und entspricht dann der Ausführung nach Fig. 3. Im Grundsatz ist die erfindungsgemäße Funktion mit beiden Varianten realisierbar.

Klar erkennbar ist, dass zwei benachbarte Lagerstellen 11a, 11b an dem proximalen Ende ausgebildet sind. An der Lagerstelle 11a wird der Bremshebel um die Schwenkachse 13 schwenkbar aufgenommen. An der Lagerstelle 11b erfolgt eine gelenkige Anbindung z.B. eines Hydraulikzylinders 17 (vgl. Fig. 2).

Zwischen den Lagerstellen 11a und 11b ist hier die Hohlkammerstruktur 6 ausgebildet, die sich in Querrichtung 14 quer zu der Längsrichtung 4 erstreckt. Die Querrichtung 14 kann senkrecht zu der Längsrichtung 4 ausgerichtet sein, ist es aber oft nicht, wie auch dieses Ausführungsbeispiel zeigt.

Wie in Fig. 4 erkennbar, verfügt die Hohlkammerstruktur 6 über mehrere benachbarte Hohlkammern 12, die sich in Querrichtung 14 aneinanderreihen.

Der Hebelkörper 3 kann über Stege 14c und Freiräume 14d verfügen, um ein geringes Gewicht zu ermöglichen. Die dünnen Stege könnten zu Verletzungen des Benutzers führen, wenn der Bremshebel bei einem Sturz dort scharf bricht. Das wird zuverlässig und weitgehend durch die Hohlkammerstruktur 6 vermieden, die eine Sollbruchstelle 30 zur Verfügung stellt. Dann wird das abstehende Ende des Hebelkörpers abgetrennt und eine Verletzungsgefahr wird erheblich verringert.

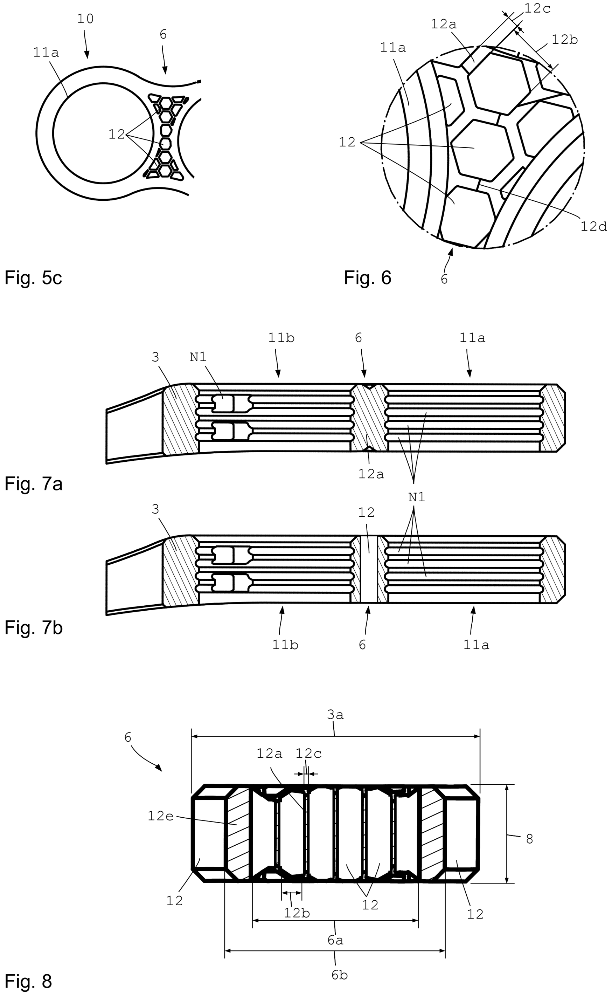

Die Figuren 5a, 5b und 5c zeigen drei konstruktive Varianten in einer jeweils vergrößerten Detailansicht.

Fig. 5a zeigt dabei im Prinzip die Ausgestaltung nach Fig. 4 in vergrößerter Darstellung, wobei die einzelnen auch im Betrieb sichtbaren Hohlkammern der Hohlkammerstruktur 6 gut sichtbar sind die sich im Wesentlichen entlang der Querrichtung 14 über die Breite des Hebelkörpers 3 erstreckt. Die Hohlkammerstruktur 6 ist zwischen den Lagerstellen 11a und 11b ausgebildet. An der Lagerstelle 11b sind Ausnehmungen oder Nuten N1 erkennbar. Diese verringern das Gewicht. Ein weiterer erheblicher Vorteil der Ausnehmungen bzw. Nuten N1 ist, dass die Toleranzen bei der Fertigung (etwas) großzügiger bemessen werden können, was bei der Fertigung mit einem 3D-Druckverfahren besonders vorteilhaft ist. Die Nuten können in allen Ausgestaltungen ringförmig oder spiralförmig in der Art eines Gewindes ausgebildet sein. Vorzugsweise werden mehrere benachbart ausgebildet. Zum Beispiel drei, vier, fünf, sechs oder sieben. Es können auch mehr oder weniger sein.

Figur 5b zeigt eine Variante, bei der zwischen den Lagerstellen 11a und 11b eine (erste) Hohlkammerstruktur 6 ausgebildet ist, die eine Sollbruchstelle 30 bildet. Benachbart zu der zweiten Lagerstelle 11b ist eine weitere oder zweite Hohlkammerstruktur 16 vorgesehen, die eine weitere Sollbruchstelle zur Verfügung stellt, sodass hier eine Kaskade von Sollbruchstellen bereitgestellt wird. Durch eine entsprechende Ausgestaltung kann beeinflusst werden, ob ein Bruch des Hebelkörpers 3 zunächst an der einen oder anderen Sollbruchstelle erfolgt.

Figur 5c zeigt eine Variante, bei der nur eine Lagerstelle 11a vorgesehen ist. Das kann z.B. der Fall sein, wenn der Hebelkörper 3 auf ein anderes Bauteil drückt oder an einem Bowdenkabel zieht oder dergleichen mehr.

In allen Ausgestaltungen ist es möglich, dass der Hebelkörpers 3 gabelförmig oder nicht gabelförmig ausgebildet ist.

Die Fig. 6 zeigt eine vergrößerte Darstellung einer Hohlkammerstruktur 6 (oder 16) in einer Draufsicht, wobei hier (wenigstens) eine Lagerstelle 11a zu erkennen ist. Die Hohlkammerstruktur 6 umfasst mehrere benachbarte Hohlkammern 12 oder Hohlräume, die sich hier in Richtung der Schwenkachse vollständig durch den Hebelkörper 3 hindurch erstrecken und an beiden Enden offen (oder geschlossen) ausgebildet sein können. Eine offene Ausgestaltung führt zur Sichtbarkeit und kann das Sicherheitsgefühl verstärken.

Die einzelnen Hohlkammern 12 können z.B. einen sechseckigen oder wabenförmigen Querschnitt aufweisen und sind voneinander durch (dünne) Wände 12c voneinander getrennt. Ein (typischer oder z.B. maximaler) Durchmesser 12b einer Hohlkammer 12 ist insbesondere zwischen zweimal und achtmal so groß wie eine Wandstärke 12c. Die Wandungen 12a können (zum Teil) Einkerbungen 12d aufweisen, um die Wirkung zu verstärken.

Figuren 7a und 7b zeigen schematisch minimal unterschiedliche Querschnitte durch einen Hebelkörper 3 mit jeweils zwei Lagerstellen 11a, 11b und einer jeweils dazwischen angeordneten Hohlkammerstruktur 6 als Sollbruchstelle 30. Zentral zwischen den beiden Lagerstellen 11a, 11b ist in Fig. 7a eine Wandung 12a zu sehen. Der leicht daneben oder unter einem anderen Winkel geschnittene schematische Querschnitt nach Fig. 7b zeigt eine Hohlkammer 12 im Zentrum, die Teil der Hohlkammerstruktur 6 ist.

Zur Verringerung des Gewichts und zur Verbesserung der Funktion der Sollbruchstelle sind Nuten N1 in den Lagerstellen 11a, 11b ausgebildet, die helfen, die auftretenden Kräfte zu bündeln.

Figur 8 zeigt einen Querschnitt in Querrichtung 14 durch einen Hebelkörper 3 entlang einer Hohlkammerstruktur. Erkennbar sind die Hohlkammern 12, die durch dünne Wandungen 12a voneinander getrennt sind. Ein Verhältnis der jeweiligen Ausdehnung oder maximalen Erstreckung 12b der Hohlkammern zu einer Wandstärke 12c ist hier größer als 3 und insbesondere größer als 4 und vorzugsweise kleiner als "8". Das bedeutet, dass mehrere kleine Hohlkammern benachbart zueinander vorhanden sind.

Die Dicke 8 entlang der Schwenkachse 13 ist wenigstens doppelt so groß wie eine (maximale) Erstreckung 12b. Eine innere Breite 6a der Hohlkammerstruktur ist vorzugsweise wenigstens halb so groß wie eine maximale äußere Breite 3a. Neben den - im Vergleich zu den Wandungen 12a zwischen zwei Hohlkammern 12 dickeren - Außenwandungen 12e können außen auch noch Hohlkammern bzw. Aussparungen 12 ausgebildet sein.

Vorzugsweise ist eine Sollbruchstelle 30 besonders nah an den Lagerstellen bzw. Lochbohrungen 11a, 11b angeordnet.

Die Hohlkammern 12 sind insbesondere frei von jeglichen Unterstützungsstrukturen.

Wie in den Figuren zu erkennen gibt es darüber hinaus weitere Merkmale, die insbesondere durch den 3D-Druck des Bremshebels 2 hervorgerufen werden können bzw. dafür dienlich sind, nämlich die Entfernung von überschüssigem Pulver. Das Pulver ist der Rohstoff für den 3D-Druck und kann schädlich für die Atmung sein. Daher ist es sinnvoll, ausreichend Öffnungen für die Entfernung von Pulver aus den hohlen Bereichen während der Herstellung vorzusehen. Es ist wünschenswert, dass diese Öffnungen von außen nicht sichtbar sind. Diese Öffnungen sollten auch so angeordnet sein, dass sie beim Drucken des Bremshebels 2 an der tiefstmöglichen Stelle sitzen, um die Menge an Pulver, die sich in den hohlen Bereichen ansammelt, zu minimieren. Es ist außerdem wünschenswert, eine zweite Öffnung zu haben, die die Verwendung von z.B. Druckluft ermöglicht, um das verbleibende Pulver aus den Hohlräumen zu drücken. Die obere Öffnung kann zum Beispiel als Einlass für Druckluft verwendet werden.

**Bezugszeichenliste:**

| | | | |
|---|---|---|---|
| 1 | Bremskomponente | 20 | Absaugöffnungen |
| 2 | Bremshebel | 30 | Sollbruchstelle |
| 3 | Hebelkörper | 40 | Bremsscheibe |
| 3a | Breite | B1 | Belastungsrichtung |
| 4 | Längsrichtung | Q1 | Querbelastungsrichtung |
| 5 | Hebelelement | N1 | Ausnehmung/ Nut |
| 6 | Hohlkammerstruktur | 101 | Rad, Vorderrad |
| 6a | innere Breite | 102 | Rad, Hinterrad |
| 6b | äußere Breite | 103 | Rahmen |
| 7 | Befestigungsschelle | 104 | Fahrradgabel |
| 8 | Dicke | 105 | Hinterraddämpfer |
| 10 | proximaler Teil | 107 | Sattel |
| 11 | distaler Teil | 109 | Radspeiche |
| 11a, 11b | Lagerstellen, Lageraufnahmen, Lagerbohrungen | 111 | Ritzeleinrichtung |
| | | 112 | Tretkurbel |
| | | 200 | Fahrrad |
| 11c | Lager | | |
| 12 | Hohlkammer, Hohlraum, Aussparung | | |
| 12a | Wandung | | |
| 12b | Erstreckung | | |
| 12c | Wandstärke | | |
| 12d | Einkerbung | | |
| 12e | Außenwandung | | |
| 13 | Schwenkachse | | |
| 14 | Querrichtung | | |
| 14a | Gabelast | | |
| 14b | Gabelast | | |
| 14c | Steg | | |
| 14d | Freiraum | | |
| 15 | Innenfläche | | |
| 16 | Hohlkammerstruktur | | |
| 17 | Bremseinheit, Bremszylinder | | |
| 18 | Befestigungselement | | |

## Patentansprüche

1. Bremskomponente (1) mit einem handbetätigten Bremshebel (2) zur Betätigung einer Handbremse insbesondere eines Fahrrads oder eines Motorrads oder dergleichen, wobei der Bremshebel (2) einen sich in einer Längsrichtung (4) erstreckenden Hebelkörper (3) mit einem daran ausgebildeten Hebelelement (5) zum handbetätigten Belasten des Bremshebels (2) umfasst, um eine Bremswirkung auszulösen, wobei ein proximaler Teil (10) des Hebelelementes (5) zumindest eine Lagerstelle (11a, 11b) aufweist,
und wobei ein distaler Teil (11) des Hebelelementes (5) dazu eingerichtet und dafür vorgesehen ist, vom Benutzer händisch unter Zugkraft gesetzt zu werden, um durch eine Schwenkbewegung um eine Schwenkachse (13) der Lagerstelle (11a, 11b) eine Bremswirkung zu veranlassen,
**dadurch gekennzeichnet,**
**dass** in dem Hebelkörper (3) benachbart zu der Lagerstelle (11a, 11b) eine sich in eine Querrichtung (14) erstreckende Hohlkammerstruktur (6) ausgebildet ist, welche quer zu der Längsrichtung (4) des Hebelelements (5) und quer zu der Schwenkachse (13) verläuft, um so im Bereich der Hohlkammerstruktur (6) eine Sollbruchstelle (30) des Hebelelements (5) bereitzustellen, damit im Falle eines Aufpralls das Hebelelement (5) an dieser vordefinierten, proximal angeordneten Sollbruchstelle (30) bricht,
und **dass** benachbart zu der ersten Lagerstelle (11a) eine zweite Lagerstelle (11b) an dem Hebelkörper (3) ausgebildet ist und wobei die Hohlkammerstruktur (6) zwischen der ersten und der zweiten Lagerstelle (11a, 11b) ausgebildet ist.

2. Bremskomponente (1) nach Anspruch 1, wobei die Hohlkammerstruktur (6) mehrere benachbarte Hohlkammern (12) umfasst, und wobei wenigstens eine Hohlkammer (12) als Aussparung ausgebildet ist und an wenigstens einem Ende zur Umgebung offen ausgebildet ist, und wobei die Hohlkammern (12) der Hohlkammerstruktur (6) jeweils von einer Wandung (12a) umgeben sind.

3. Bremskomponente (1) nach dem vorhergehenden Anspruch, wobei wenigstens eine Wandung (12a) um eine Hohlkammer (12) eine Einkerbung (12d) aufweist.

4. Bremskomponente (1) nach einem der vorhergehenden Ansprüche, wobei die Hohlkammerstruktur (6) in der Querrichtung (14) erheblich länger ausgebildet ist als in der Längsrichtung (4) und/oder entlang der Schwenkachse (13) und wobei sich die Hohlkammerstruktur (6) über mehr als 2/3 einer Breite (3a) des Hebelkörpers (3) erstreckt.

5. Bremskomponente (1) nach einem der vorhergehenden Ansprüche, wobei die Hohlkammerstruktur (6) eine Wabenstruktur und/oder Gitternetzstruktur aufweist.

6. Bremskomponente (1) nach einem der vorhergehenden Ansprüche, wobei eine maximale Erstreckung (12b) einer Hohlkammer in einer durch die Querrichtung (14) und die Längsrichtung (4) aufgespannten Ebene kleiner ist als 1/3 einer Breite (3a) des Hebelkörpers (3) in dem Bereich der Hohlkammerstruktur (6).

7. Bremskomponente (1) nach einem der vorhergehenden Ansprüche, wobei wenigstens eine zweite Hohlkammerstruktur (16) an dem Hebelkörper (3) ausgebildet ist und wobei die zweite Hohlkammerstruktur (16) benachbart zu der zweiten Lagerstelle (11b) ausgebildet ist und wobei die erste Hohlkammerstruktur (10) und die zweite Hohlkammerstruktur (16) Sollbruchstellen für unterschiedliche Lastfälle zur Verfügung stellen.

8. Bremskomponente (1) nach einem der vorhergehenden Ansprüche, wobei der Hebelkörper (3) wenigstens ein Paar entlang der Schwenkachse (13) fluchtend übereinander angeordneter Lagerstellen (11a, 11b) aufweist, dem ein Paar von Hohlkammerstrukturen (6) zugeordnet ist.

9. Bremskomponente (1) nach dem vorhergehenden Anspruch, wobei der distale Teil (11) des Bremshebels (2) in Richtung des proximalen Teils (10) des Bremshebels (2) gabelförmig verläuft und zwei übereinander verlaufende Gabeläste (14a, 14b) ausbildet, an welchen die miteinander fluchtenden Lagerstellen (11a, 11b) und Hohlkammerstrukturen (6, 16) ausgebildet sind und wobei an den zwei übereinander verlaufenden Gabelästen (14a, 14b) ein zweites Paar fluchtend übereinander angeordneter Lagerstellen (11b) umfasst ist.

10. Bremskomponente (1) nach dem vorhergehenden Anspruch, wobei zwischen dem ersten und dem zweiten Paar der Lagerstellen (11a, 11b) die Hohlkammerstruktur (6) als Sollbruchstelle (30) ausgebildet ist.

11. Bremskomponente (1) nach einem der vorhergehenden Ansprüche, wobei Sollbruchstellen (30) an verschiedenen Gabelästen (14a, 14b) ausgebildet sind, sodass eine Verletzung des Benutzers an einem Rest des Hebelelementes (5) vermieden wird.

12. Bremskomponente (1) nach einem der vorhergehenden Ansprüche, wobei wenigstens das Hebelelement (5) mittels eines 3D-Druckverfahren erzeugt ist, sodass die Hohlkammerstruktur durch den sukzessiven Schichtaufbau gedruckt ist, und wobei das Hebelelement (5) einstückig mit einem Kunststoff gebildet ist und wobei der Kunststoff vorzugsweise faserverstärkt ist.

13. Bremskomponente (1) nach einem der vorhergehenden Ansprüche, wobei das Hebelelement (5) zumindest stellenweise mit einem Metall oder einem Metallverbundwerkstoff gebildet ist.

14. Bremskomponente (1) nach einem der vorhergehenden Ansprüche, wobei eine Bremseinheit (17) wie ein hydraulicher Bremszylinder umfasst ist und wobei der Bremshebel (2) für ein Fahrrad oder Motorrad ist und am Lenker befestigt ist, und wobei der Bremshebel (2) mittels Drehung um zumindest eine Schwenkachse (13) einer Lagerstelle (11a, 11b) eine Bremshydraulik betätigt.

15. Fahrrad mit einem Rahmen, wenigstens zwei Rädern (101, 102) und einem Lenker und wenigstens einer Bremskomponente (1) nach einem der vorhergehenden Ansprüche, wobei der Bremshebel an dem Lenker befestigt ist.
